# EUROPEAN PATENT APPLICATION

(11) **EP 2 690 522 A1**
(43) Date of publication of application: **29.01.2014**
(21) Application number: 11861547.5
(22) Date of filing: 22.03.2011
(51) Int. Cl.: G06F 1/32

(54) **COMMUNICATION CONTROL DEVICE, COMMUNICATION CONTROL METHOD, AND COMMUNICATION CONTROL CIRCUIT**

(71) Applicant: Fujitsu Limited, Kawasaki-shi, Kanagawa 211-8588 (JP)
(72) Inventor: NAKAGAWA, Satoshi, Kawasaki-shi, Kanagawa 211-8588 (JP); UCHIDA, Kenji, Kawasaki-shi, Kanagawa 211-8588 (JP)
(74) Representative: Stebbing, Timothy Charles
(86) International application number: PCT/JP2011/056850
(87) International publication number: WO 2012/127632

(57) **Abstract**

A communication control circuit (20) includes SerDeses (21, 22) that transmit data to other communication control circuits. The communication control circuit (20) monitors an amount of data to be transmitted by the SerDeses (21, 22) and determines whether to shift the state of the SerDes (22) to a power-saving state in which less power is consumed, based on the monitored amount of data. When determining that the state of the SerDes (22) is to be shifted to the power-saving state, the communication control circuit (20) causes the SerDes (22) to enter the power-saving state.

## Description

### [Technical Field]

The embodiments discussed herein are directed to a communication control apparatus, a communication control method, and a communication control circuit.

### [Background Art]

Conventionally, in a serial transmission technology for transmitting one bit of data via a transmission path, a high-speed serial transmission technology is known that improves the bit rate of data transmission. Furthermore, an LSI (Large Scale Integration) that enables data transmission by using the high-speed serial transmission technology is also known.

The LSI includes an IO (Input Output) macro as a circuit for transmitting and receiving data by using the high-speed serial transmission technology. However, the IO macro for the high-speed serial transmission technology operates at high frequency in units of GHz and therefore increases the power consumption of the LSI.

To prevent an increase in the power consumption, a technology has been proposed, in which the amount of data transmitted and received is measured at predetermined time intervals and the bandwidth of a bus serving as a transmission path is controlled according to the measured amount of data in order to reduce the power consumption.

For example, the LSI equipped with the above technology measures the amount of data transmitted and received via a transmission path at predetermined time intervals, and determines whether the measured amount of data is equal to or smaller than a predetermined threshold. When determining that the measured amount of data is equal to or smaller than the predetermined threshold, the LSI inhibits the IO macro from operating in order to shift the state of the transmission path to a power-saving state in which less power is consumed.

### [Citation List]

### [Patent Citation]

Patent Literature 1: Japanese Laid-open Patent Publication No. 2002-259327

### [Summary of Invention]

### [Technical Problem]

However, in the technology for controlling the state of the transmission path according to the amount of transmitted/received data, the state of the transmission path is controlled not by the amount of data that is currently transmitted and received but the amount of data that has already been transmitted and received. Therefore, if the amount of data that is currently transmitted and received or to be transmitted and received in the future greatly increases or decreases compared with the amount of data transmitted and received in the past, there is a problem in that it becomes difficult to appropriately reduce the power consumption until the amount of the transmitted/received data is measured again.

For example, the LSI measures the amount of transmitted/received data, and if the measured amount of the data is greater than a predetermined threshold, the LSI continues to transmit and receive data without shifting the state of the transmission path to the power-saving state. However, even if the amount of subsequently-transmitted data is equal to or smaller than the predetermined threshold, the LSI continues to transmit and receive data until the LSI determines that the amount of data is smaller than the predetermined threshold. Consequently, the LSI does not shift the state of the transmission path to the power-saving state even through the amount of transmitted/received data is equal to or smaller than the predetermined threshold, so that it becomes difficult to reduce the power consumption.

Furthermore, a certain time is needed to shift the transmission path from the power-saving state to a normal operation state. However, the LSI controls the state of the transmission path according to the amount of data that has been transmitted and received. Therefore, even if data to be transmitted is generated while the transmission path is in the power-saving state, the LSI shifts the state of the transmission path to the normal operation state only after the data to be transmitted reaches the IO macro. Therefore, a delay time taken to transmit data is increased.

The LSI provided in a high-performance server or a supercomputer may be configured to transmit and receive data to and from other LSIs by using a multi-link system for transmitting and receiving data via a plurality of transmission paths in order to improve the data transfer performance. However, if the state of each of the transmission paths is controlled according to the amount of data that has been transmitted and received, even the LSI that transmits and receives data by using the multi-link system is not able to appropriately reduce the power consumption when the amount of data to be transmitted and received suddenly increases.

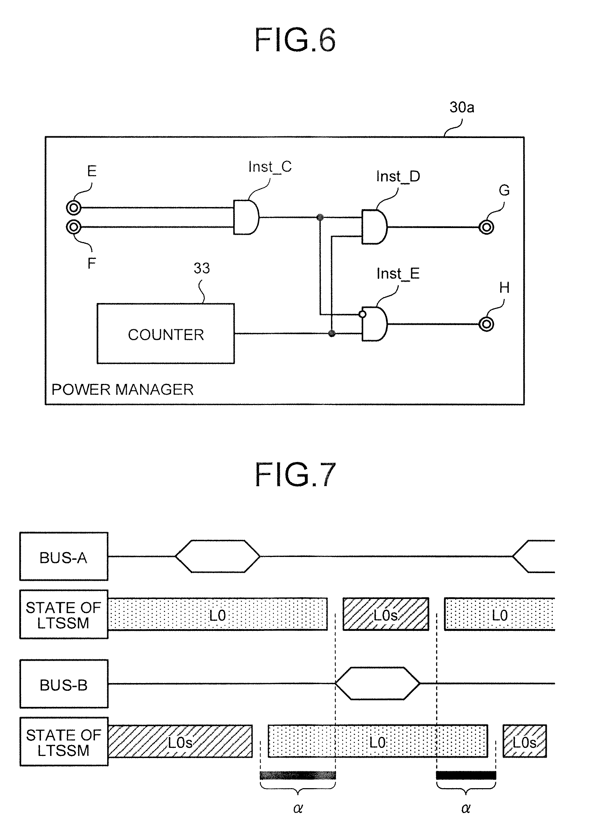

Meanwhile, FIG. 7 is a diagram for explaining a technology for shifting each of transmission paths to the power-saving state. In the example illustrated in FIG. 7, an LSI includes two transmission paths BUS-A and BUS-B. An LTSSM (Link Training Status State Machine) illustrated in FIG. 7 indicates the state of each of the transmission paths, where "L0" indicates the normal operation state and "L0s" indicates the power-saving state.

The LSI as described above measures the amount of data transmitted and received by each of the transmission paths at predetermined time intervals, and shifts the state of a transmission path whose measured amount of data is "0" to the power-saving state. However, even when data can be transmitted and received by one transmission path in terms of the amount of the data, if the data is transmitted and received by using both of the transmission paths, the LSI sets both of the transmission paths to the "L0" state during a period α in FIG. 7. As a result, the power of the LSI is wasted during the period α in FIG. 7.

According to one aspect of the disclosed technology, it is possible to appropriately reduce power consumption even when the amount of data to be transmitted and received increases or decreases.

### [Solution to Problem]

To solve the above problem and attain the object, according to an aspect, a communication control apparatus includes a transmitting circuit that transmits data to other communication control apparatuses. The communication control apparatus monitors an amount of data to be transmitted by the transmitting circuit and determines whether to shift a state of the transmitting circuit to a power-saving state according to the amount of data monitored, the power-saving state being a state in which power consumption is low. The communication control apparatus causes the transmitting circuit to enter the power-saving state when the communication control apparatus determines that the state of the transmitting circuit is to be shifted to the power-saving state.

### [Advantageous Effects of Invention]

According to one aspect, it is possible to appropriately reduce power consumption even when the amount of data to be transmitted and received increases or decreases.

### [Brief Description of Drawings]

FIG. 1 is a diagram for explaining LSIs according to a first embodiment.
FIG. 2 is a diagram for explaining a communication control circuit according to the first embodiment.
FIG. 3 is a diagram for explaining a power manager according to the first embodiment.
FIG. 4 is a diagram for explaining power saving control by the communication control circuit according to the first embodiment.
FIG. 5 is a diagram for explaining a communication control circuit according to a second embodiment.
FIG. 6 is a diagram for explaining a power manager according to the second embodiment.
FIG. 7 is a diagram for explaining a technology for shifting each of transmission paths to a power-saving state.

### [Embodiments for Carrying Out the Invention]

Preferred embodiments of a communication control apparatus, a communication control method, and a communication control circuit according to the present invention will be explained below with reference to accompanying drawings.

### First Embodiment

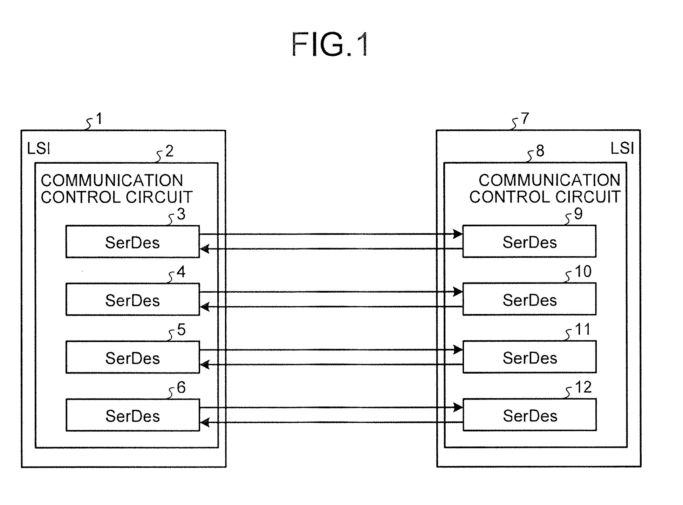

In a first embodiment described below, an example of an LSI (Large Scale Integration) including a communication control apparatus will be explained with reference to drawings. FIG. 1 is a diagram for explaining LSIs according to the first embodiment. An LSI 1 is an LSI that performs at least data transmission to other LSIs by using a multi-link system.

As illustrated in FIG. 1, the LSI 1 includes a communication control circuit 2. The communication control circuit 2 includes a plurality of SerDeses (Serializer/Deserializers) 3 to 6, and transmits and receives data to and from an LSI 7 by using each of the SerDeses 3 to 6. In the example illustrated in FIG. 1, the LSI 1 transmits and receives data via four transmission paths. However, the embodiment is not limited to this example, and data may be transmitted and received via an arbitrary number of transmission paths.

The LSI 7 includes a communication control circuit 8. The communication control circuit 8 includes a plurality of SerDeses 9 to 12, and transmits and receives data to and from the LSI 1 by using each of the SerDeses 9 to 12. The LSI 7 has the same configuration as the LSI 1, and therefore, explanation thereof will be omitted.

For example, the LSI 1 is an information processing apparatus that performs processes in parallel to the LSI 7. To notify the LSI 7 of a value that the LSI 1 has calculated through own process, the LSI 1 generates a packet containing the calculated value and transmits the generated packet to the LSI 7 via each of the SerDeses 3 to 6. When receiving packets from the SerDeses 9 to 12 of the LSI 7, the LSI 1 acquires values contained in the received packets and performs a process by using the acquired values.

The SerDes 3 is a transmitting unit that transmits a packet to the SerDes 9 of the LSI 7. Specifically, when acquiring a packet to be transmitted, the SerDes 3 converts the acquired packet into serial data, and transmits the converted serial data to the SerDes 9 of the LSI 7.

When receiving serial data from the SerDes 9 of the LSI 7, the SerDes 3 converts the received serial data to parallel data. The LSI 1 transmits the converted parallel data to a unit or a circuit (not illustrated) that performs various types of information processing.

The SerDes 3 includes an LTSSM (Link Training Status State Machine). When receiving a notice indicating that the LTSSM enters a power-saving state to be described later, the SerDes 3 stops packet transmission and reception and enters the power-saving state to reduce power consumption. When receiving a notice indicating that the LTSSM enters a normal operation state while the SerDes 3 is in the power-saving state, the SerDes 3 enters a state in which packet transmission and reception is enabled. The other SerDeses 4 to 6 and 9 to 12 perform the same process as the SerDes 3, and therefore, explanation thereof will be omitted.

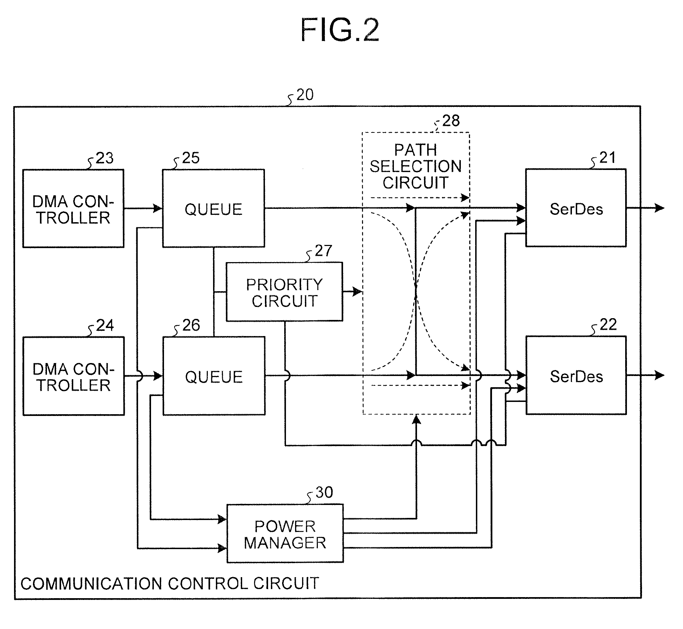

With reference to FIG. 2, a communication control circuit 20 that performs the same process as the above-described communication control circuit 2 will be explained below. FIG. 2 is a diagram for explaining the communication control circuit according to the first embodiment. The communication control circuit 20 explained below transmits and receives packets by using two transmission paths.

In the example illustrated in FIG. 2, the communication control circuit 20 includes SerDeses 21 and 22, DMA (Direct Memory Access) controllers 23 and 24, a plurality of queues 25 and 26, a priority circuit 27, a path selection circuit 28, and a power manager 30.

In the example illustrated in FIG. 2, the SerDeses 21 and 22 of the communication control circuit 20 perform the same process as the SerDes 3, and therefore, explanation thereof will be omitted.

Processes performed by the units 23 to 28 and 30 of the communication control circuit 20 will be explained below. When receiving transmission target data, the DMA controller 23 generates a packet containing the received data.

Specifically, when receiving transmission target data from a unit or a circuit that performs various types of information processing, the DMA controller 23 generates a packet containing the received data. Subsequently, the DMA controller 23 sends the generated packet to the queue 25. The DMA controller 23 can generate a packet corresponding to an arbitrary protocol.

Similarly to the DMA controller 23, when receiving transmission target data, the DMA controller 24 generates a packet containing the received data. Subsequently, each DMA controller 24 transmits the generated packet to the queue 26. Specifically, the DMA controller 23 transmits the generated packet to the queue 25, and the DMA controller 24 transmits the generated packet to the queue 26.

The queue 25 is a buffer that, when a packet to be transmitted is generated, temporarily stores the generated packet. Specifically, the queue 25 receives the packet generated by the DMA controller 23. Subsequently, the queue 25 temporarily stores the received packet.

In addition, the queue 25 transmits the number of packets temporarily stored in the queue 25, that is, a signal indicating the number of entries stored in the queue 25, to the power manager 30. When receiving a notice indicating transmission of a packet from the priority circuit 27 to be described later, the queue 25 sends a packet that has been received first among the packets stored in the queue 25 to the path selection circuit 28.

Similarly to the queue 25, when receiving the packet generated by each DMA controller 24, the queue 26 temporarily stores the received packet. When receiving a notice indicating transmission of a packet from the priority circuit 27 to be described later, the queues 25 and 26 send a packet that has been received first among the packets stored in the queue 26 to the path selection circuit 28. In addition, the queue 26 transmits a signal indicating the number of entries stored in the queue 26 to the power manager 30.

The priority circuit 27 determines the order of transmission of the packets stored in the queues 25 and 26. Specifically, the priority circuit 27, which performs a normal process of issuing a packet, selects a packet that has been stored first in each of the queues 25 and 26 from among the packets stored in each of the queues 25 and 26, as a packet to be issued next.

As a method that the priority circuit 27 can employ to determine a packet to be transmitted next from among the packets stored in the queues 25 and 26, it may be possible to alternately select the queues 25 and 26 by the round robin scheme, and select a packet that has been stored first in the selected queue. Alternatively, the priority circuit 27 may employ the LRU (Least Recently Used) scheme to select a packet that has been stored first in a queue in which packets have been selected the least number of times. Namely, the priority circuit 27 can use an arbitrary method to select a queue.

The priority circuit 27 checks operation of each of the SerDeses 21 and 22 and determines a SerDes that is in the normal operation state and that is not currently transmitting a packet. When determining the SerDes that is in the normal operation state and that is not currently transmitting a packet, the priority circuit 27 sends a notice indicating the determined SerDes to the path selection circuit 28. In addition, the priority circuit 27 sends a notice indicating transmission of a selected packet to the queue in which the selected packet is stored.

An example of a process performed by the priority circuit 27 will be explained below. First, an explanation is given of an example of a process performed by the priority circuit 27 when each of the SerDeses 21 and 22 is in the normal operation state and a packet to be transmitted next is stored in the queue 25.

For example, the priority circuit 27 that performs a normal process of issuing a packet selects, as a packet to be issued, a packet that has been stored first in the queue 25 from among the packets stored in each of the queues 25 and 26. In addition, the priority circuit 27 checks the operation state of each of the SerDeses 21 and 22, and determines that each of the SerDeses 21 and 22 is in the normal operation state and the SerDes 21 is not currently transmitting a packet. In this case, the priority circuit 27 sends a notice indicating transmission of the packet to the queue 25, and sends a notice indicating the SerDes 21 to the path selection circuit 28.

Subsequently, the queue 25 sends a packet that has been stored first among the packets stored in the queue 25 to the path selection circuit 28. In addition, when receiving the notice indicating the SerDes 21 from the priority circuit 27 as will described later, the path selection circuit 28 transfers the packet sent by each of the queues 25 and 26 to the SerDes 21. Therefore, the SerDes 21 can appropriately acquire the packet sent by the queue 25, and transmit the acquired packet to other LSIs.

Next, an explanation is given of a process performed by the priority circuit 27 when the SerDes 22 has entered the power-saving state and a packet to be transmitted next is stored in the queue 26.

In this case, the priority circuit 27 selects a packet stored in the queue 26 as a packet to be transmitted next. The priority circuit 27 also determines whether the SerDes 21 in the normal operation state is currently transmitting a packet. When determining that the SerDes 21 in the normal operation state is not currently transmitting a packet, the priority circuit 27 sends a notice indicating the SerDes 21 to the path selection circuit 28. The priority circuit 27 also sends a notice indicating transmission of the packet to the queue 26.

Subsequently, the queue 26 sends a packet that has been stored first among the packets stored in the queue 26 to the path selection circuit 28. In addition, when receiving the notice indicating the SerDes 21 from the priority circuit 27 as will be described later, the path selection circuit 28 transfers the packet sent by each of the queues 25 and 26 to the SerDes 21. Therefore, the SerDes 21 can appropriately acquire the packet sent by the queue 26, and transmit the acquired packet to other LSIs.

The path selection circuit 28 is a circuit that transfers packets sent by each of the queues 25 to 26 to any of the SerDeses 21 and 22. Specifically, when receiving a notice indicating any of the SerDeses from the priority circuit 27, the path selection circuit 28 transfers a packet sent by each of the queues 25 and 26 to the SerDes indicated by the notice. In addition, when receiving a disable signal indicating any of the SerDeses from the power manager 30 to be described later, the path selection circuit 28 disconnects the connection between the SerDes indicated by the disable signal and each of the queues 25 and 26.

For example, when receiving a notice indicating the SerDes 21 from the priority circuit 27, the path selection circuit 28 transfers packets sent by the queues 25 and 26 to the SerDes 21. In addition, when receiving a notice indicating the SerDes 22 from the priority circuit 27, the path selection circuit 28 transfers packets sent by the queues 25 and 26 to the SerDes 22.

In this way, the priority circuit 27 and the path selection circuit 28 distributes the packets stored in each of the queues 25 and 26 to each of the SerDeses 21 and 22 according to the operation state of each of the SerDeses 21 and 22. Therefore, the LSI 1 can improve the usage rate of multiple transmission paths used for communication with other LSIs. As a result, the LSI 1 can improve the communication performance.

Furthermore, for example, when receiving a disable signal indicating the SerDes 21 from the power manager 30, the path selection circuit 28 disconnects the connection between each of the queues 25 and 26 and the SerDes 21. Moreover, for example, when receiving a disable signal indicating the SerDes 22 from the power manager 30, the path selection circuit 28 disconnects the connection between each of the queues 25 and 26 and the SerDes 22.

Meanwhile, the path selection circuit 28 can employ an arbitrary method as a method to disconnect the connection between the SerDes indicated by the disable signal notified by the power manager 30 and each of the queues 25 and 26.

For example, the path selection circuit 28 includes an FET (Field-Effect Transistor) between each of the queues 25 and 26 and the SerDes 21. The path selection circuit 28 may control the FET by using the disable signal indicating the SerDes 21 in order to disconnect the connection between each of the queues 25 and 26 and the SerDes 21.

The power manager 30 monitors the amount of data to be transmitted by each of the SerDeses 21 and 22. The power manager 30 determines whether to shift the state of each of the SerDeses 21 and 22 to the power-saving state in which power consumption is lower than that in the normal state, according to the monitored amount of data. In this case, the power manager 30 determines the number of SerDeses to be shifted to the power-saving state so that a pre-set number of SerDeses can be maintained in the normal operation state.

Subsequently, when determining that the state of each of the SerDeses 21 and 22 is to be shifted to the power-saving state, the power manager 30 controls the operation of each of the SerDeses 21 and 22 and shifts the state of each of the SerDeses 21 and 22 to the power-saving state.

Specifically, the power manager 30 monitors the amount of data stored in each of the queues 25 and 26, and determines whether the sum of the monitored amounts of data is greater than a predetermined threshold. When determining that the sum of the monitored amounts of data is equal to or smaller than the predetermined threshold, the power manager 30 transmits a notice of a shift to the power-saving state to any of the SerDeses 21 and 22. When determining that the sum of the monitored amounts of data is greater than the predetermined threshold, the power manager 30 transmits a notice of a shift to the normal operation state to each of the SerDeses.

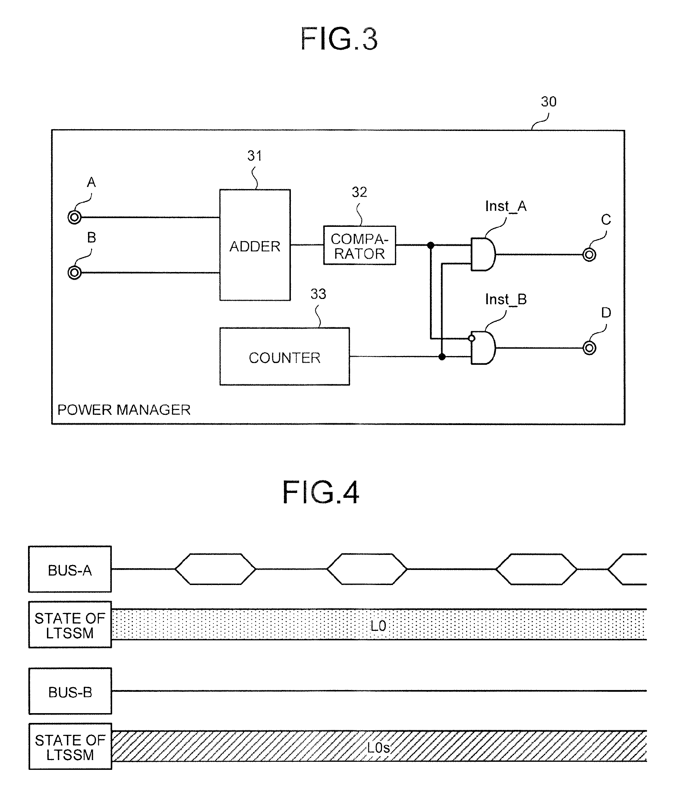

An example of a circuit of the power manager 30 will be explained below with reference to FIG. 3. FIG. 3 is a circuit diagram for explaining an example of the power manager according to the first embodiment.

In the example illustrated in FIG. 3, the power manager 30 includes an adder 31, a comparator 32, and a counter 33. The power manager 30 also includes an Inst_A serving as an AND gate, and an Inst_B serving as an AND gate in which a signal from the comparator 32 is input by being inverted.

Furthermore, in the example illustrated in FIG. 3, in the power manager 30, a signal indicating the number of entries of the queue 25 is input from an input terminal A in FIG. 3, and a signal indicating the number of entries of the queue 26 is input from an input terminal B in FIG. 3.

Moreover, in the example illustrated in FIG. 3, when a signal with a logical value of "High" is output to an input terminal C in FIG. 3, the power manager 30 transmits a signal indicating a shift to the normal operation state to the LTSSM of the SerDes 22. In addition, when a signal with the logical value of "High" is output to an input terminal D in FIG. 3, the power manager 30 transmits a signal indicating a shift to the power-saving state to the LTSSM of the SerDes 22.

The adder 31 calculates the sum of the number of entries of the queue 25 and the number of entries of the queue 26, and sends a signal indicating the calculated value to the comparator 32. Namely, the adder 31 calculates the sum of the number of packets stored in the queue 25 and the number of packets stored in the queue 26, and sends the calculated value to the comparator 32.

When receiving a signal indicating the number of packets calculated by the adder 31, the comparator 32 determines whether the number of packets indicated by the received signal is greater than a predetermined threshold T_{INT}.

When determining that the number of packets indicated by the received signal is greater than the predetermined threshold T_{INT}, the comparator 32 sends a signal with the logical value of "High" to the Inst_A and the Inst_B. On the other hand, when determining that the number of packets indicated by the received signal is equal to or smaller than the predetermined threshold T_{INT}, the comparator 32 sends a signal with the logical value of "Low" to the Inst_A and the Inst_B.

The counter 33 sends a pulse signal with the logical value of "High" to the Inst_A and the Inst_B at predetermined time intervals. Specifically, assuming that a time needed to transmit one packet by each of the SerDeses 21 and 22 is one cycle, the counter 33 outputs the pulse signal in a cycle T_{INT}. For example, the counter 33 sends a pulse signal with the logical value of "High" to the Inst_A and the Inst_B every time a time corresponding to the cycle T_{INT} elapses.

When receiving a signal with the logical value of "High" from the comparator 32 and receiving a signal with the logical value of "High" from the counter 33, the Inst_A outputs a signal with the logical value of "High" to C in FIG. 3. Namely, when the amount of packets to be transmitted is greater than the predetermined threshold T_{INT}, the power manager 30 sets the states of the SerDeses 21 and 22 to the normal operation state. Therefore, the communication control circuit 20 can efficiently transmit packets.

On the other hand, when receiving a signal with the logical value of "Low" from the comparator 32 and receiving a signal with the logical value of "High" from the counter 33, the Inst_B outputs a signal with the logical value of "High" to D in FIG. 3. Namely, when the amount of packets to be transmitted is equal to or smaller than the predetermined threshold T_{INT}, the power manager 30 shifts the state of the SerDes 22 to the power-saving state. Therefore, the communication control circuit 20 can appropriately reduce the power consumption.

As described above, when the number of packets stored in the queues 25 and 26 is greater than the number of packets that can be transmitted by each of the SerDeses within a predetermined time, the power manager 30 maintains the SerDeses 21 and 22 in the normal operation state. Furthermore, when the number of packets stored in the queues 25 and 26 is equal to or a smaller than the number of packets that can be transmitted by each of the SerDeses 21 and 22 within a predetermined time, the power manager 30 maintains the state of the SerDes 22 in the power-saving state.

In this way, the power manager 30 determines whether the number of packets to be transmitted is greater than the predetermined threshold, and when determining that the number of packets to be transmitted is equal to or smaller than the predetermined threshold, the power manager 30 shifts the state of the SerDes 22 to the power-saving state. Therefore, the communication control circuit 20 can appropriately reduce the power consumption.

Specifically, when the number of packets to be transmitted is greater than the predetermined threshold, the communication control circuit 20 transmits the packets by using the SerDeses 21 and 22. When the number of packets to be transmitted is equal to or smaller than the predetermined threshold, that is, when determining that it is possible to appropriately transmit remaining packets by using only the SerDes 21, the communication control circuit 20 shifts the SerDes 22 to the power-saving state.

Therefore, as illustrated in FIG. 4, when it is possible to appropriately transmit remaining packets by only the SerDes 21, the communication control circuit 20 can shift the SerDes 22 to the power-saving state instead of maintaining the SerDes 22 in the normal operation state. Therefore, it is possible to appropriately reduce the power consumption. Meanwhile, FIG. 4 is a diagram for explaining power saving control performed by the communication control circuit according to the first embodiment.

When the communication control circuit 20 is to shift the SerDes 22 to the power-saving state, the communication control circuit 20 aggregates the packets stored in the queues 25 and 26 to the SerDes 21 by using the priority circuit 27 and the path selection circuit 28. Therefore, the communication control circuit 20 can appropriately transmit the packets stored in the queues 25 and 26.

Furthermore, if the number of packets stored in the queues 25 and 26 exceeds the predetermined threshold while the SerDes 22 is in the power-saving state, the communication control circuit 20 shifts the state of the SerDes 22 back to the normal operation state. Namely, when determining that it is difficult to appropriately transmit the packets stored in the queues 25 and 26 by only the SerDes 21 while the SerDes 22 is in the power-saving state, the communication control circuit 20 shifts the state of the SerDes 22 back to the normal operation state. Therefore, the communication control circuit 20 can reduce the power consumption without increasing the packet latency.

Furthermore, the communication control circuit 20 maintains the SerDes 21 in the normal operation state and shifts the state of only the SerDes 22. Namely, the communication control circuit 20 always maintains the SerDes 21 in the normal operation state, so that even when a large number of packets are suddenly generated while there has been no packet to be transmitted, it is possible to transmit the packets without increasing the packet latency.

For example, each of the communication control circuits 2 and 8, each of the SerDeses 3 to 6 and 9 to 12, each of the DMA controllers 23 and 24, the priority circuit 27, the path selection circuit 28, and the power manager 30 are electronic circuits. As an example of the electronic circuit, an integrated circuit, such as an ASIC (Application Specific Integrated Circuit) or an FPGA (Field Programmable Gate Array), or a circuit constituting a wired logic may be applied.

In addition, the queues 25 and 26 are buffers, and a semiconductor memory element, such as a RAM (Random Access Memory) or a flash memory (flash memory), may be employed.

### [Advantageous effect of the First Embodiment]

As described above, the communication control circuit 20 monitors the number of packets to be transmitted, and determines whether to shift the state of the SerDes 22 to the power-saving state according to the monitored number of packets. When determining that the state of the SerDes 22 is to be shifted to the power-saving state, the communication control circuit 20 causes the SerDes 22 to enter the power-saving state.

Therefore, even when the number of packets that is currently transmitted or to be transmitted in the future greatly increases or decreases, because the communication control circuit 20 shifts the state of the SerDes 22 in accordance with the number of packets to be transmitted, it is possible to appropriately reduce the power consumption.

Furthermore, the communication control circuit 20 monitors the number of packets stored in each of the queues 25 and 26 to thereby monitor the number of packets to be transmitted. Therefore, the communication control circuit 20 can appropriately monitor the number of packets to be transmitted, that is, the amount of data that is currently transmitted or to be transmitted in the future.

Moreover, the communication control circuit 20 maintains the SerDes 21 that is set in advance in the normal operation state. Therefore, even when a large number of packets are suddenly generated while there has been no packet to be transmitted, it becomes possible to transmit the packets without increasing the packet latency.

### Second Embodiment

In a second embodiment described below, a communication control circuit will be explained that controls the state of the SerDes 22 based on whether each of the DMA controllers 23 and 24 is generating a packet.

As described above, the communication control circuit 20 according to the first embodiment determines whether to shift the state of the SerDes 22 to the power-saving state according to the number of packets stored in each of the queues 25 and 26. However, for example, the communication control circuit 20 may determine whether to shift the state of the SerDes 22 to the power-saving state based on whether each of the DMA controllers 23 and 24 is generating a packet, instead of based on the number of packets stored in each of the queues 25 and 26.

Therefore, in the following, an explanation is given of the communication control circuit 20 that determines whether to shift the state of the SerDes 22 to the power-saving state based on whether each of the DMA controllers 23 and 24 is generating a packet.

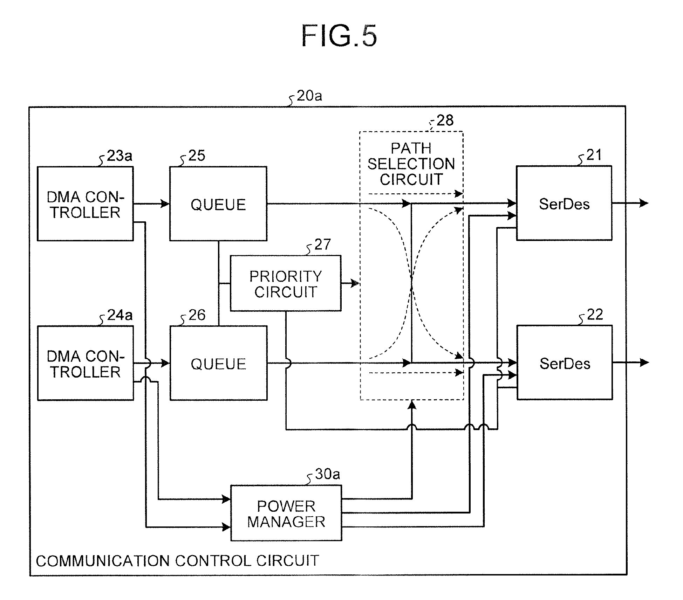

FIG. 5 is a diagram for explaining a communication control circuit according to the second embodiment. In the example illustrated in FIG. 5, a communication control circuit 20a includes a plurality of the SerDeses 21 and 22, a plurality of DMA controller 23a and 24a, a plurality of the queues 25 and 26, the priority circuit 27, the path selection circuit 28, and a power manager 30a. The SerDeses 21 and 22, the queues 25 and 26, the priority circuit 27, and the path selection circuit 28 perform the same processes as those performed by the units 21, 22, and 25 to 28 of the first embodiment, and therefore, the same explanation will be omitted.

The DMA controller 23a generates a packet and transmits the generated packet to the queue 25, similarly to the DMA controller 23. Furthermore, when the DMA controller 23a is generating a packet, the DMA controller 23a transmits a signal with the logical value of "High", as a signal indicating whether a packet is being generated, to the power manager 30a. When the DMA controller 23a is not generating a packet, that is, when it is not in operation, the DMA controller 23a transmits a signal with the logical value of "Low", as the signal indicating whether a packet is being generated, to the power manager 30a.

Similarly, the DMA controller 24a generates a packet and transmits the generated packet to the queue 26. Furthermore, the DMA controller 24a transmits a signal with the logical value of "High" to the power manager 30a when the DMA controller 24a is generating a packet, and transmits a signal with the logical value of "Low" to the power manager 30a when the DMA controller 24a is not generating a packet.

The power manager 30a monitors whether each of the DMA controllers 23a and 24a is generating a packet. When each of the DMA controllers 23a and 24a is not generating a packet, the power manager 30a determines that the state of the SerDes 22 it to be shifted to the power-saving state. When determining that the state of the SerDes 22 is to be shifted to the power-saving state, the power manager 30a causes the SerDes 22 to enter the power-saving state.

An example of a circuit of the power manager 30a will be explained below with reference to FIG. 6. FIG. 6 is a circuit diagram for explaining an example of the power manager according to the second embodiment. In the example illustrated in FIG. 6, the power manager 30a includes an Inst_C and an Inst_D serving as AND gates, an Inst_E in which a signal from the Inst_C is input by being inverted, and the counter 33. The counter 33 is a counter that outputs a pulse signal with the logical value of "High" in the cycle T_{INT}, similarly to the counter 33 according to the first embodiment.

Furthermore, in the example illustrated in FIG. 6, in the power manager 30a, a signal indicating that the DMA controller 23a is generating a packet is input from E in FIG. 6, and a signal indicating that the DMA controller 24a is generating a packet is input from F in FIG. 6.

Moreover, in the example illustrated in FIG. 6, when a signal with the logical value of "High" is output to G in FIG. 6, the power manager 30a transmits a signal indicating a shift to the normal operation state to the LTSSM of the SerDes 22. In addition, when a signal with the logical value of "High" is output to H in FIG. 6, the power manager 30a transmits a signal indicating a shift to the power-saving state to the LTSSM of the SerDes 22.

The Inst_C receives a signal indicating whether each of the DMA controllers 23a and 24a is generating a packet. When the logical values of both of the received signals are "High", that is, when both of the DMA controllers 23a and 24a are generating packets, the Inst_C outputs a signal with the logical value of "High".

Furthermore, when the logical values of both of the received signals are not "Low", that is, when any of the DMA controllers 23a and 24a or both of the DMA controllers 23a and 24a are generating packets, the Inst_C outputs a signal with the logical value of "Low".

The Inst_D receives a signal output by the Inst_C and a signal output by the counter 33. When the logical values of the received signals are "High", the Inst_D outputs a signal with the logical value of "High" to G in FIG. 6. Specifically, when both of the DMA controllers 23a and 24a are generating packets, the power manager 30a maintains the states of the SerDeses 21 and 22 in the normal operation state. Therefore, the communication control circuit 20a can efficiently transmit packets.

When receiving a signal with the logical value of "Low" from the Inst_C and receiving a signal with the logical value of "High" from the counter 33, when receiving a signal with the logical value of "High", the Inst_E outputs a signal with the logical value of "High" to H in FIG. 6. Specifically, when any of the DMA controllers 23a and 24a or both of the DMA controllers 23a and 24a are not generating packets, the power manager 30a shifts the state of the SerDes 22 to the power-saving state. Therefore, the communication control circuit 20a can appropriately reduce the power consumption.

### [Advantageous effect of the Second Embodiment]

As described above, the communication control circuit 20a includes a plurality of the DMA controller 23a and 24a that generate packets, and monitors whether each of the DMA controllers 23a and 24a is generating a packet. When any of the DMA controllers 23a and 24a or both of the DMA controllers 23a and 24a are not generating packets, the communication control circuit 20a shifts the operation of the SerDes 22 to the power-saving state.

Therefore, the communication control circuit 20a can appropriately reduce the power consumption while preventing latency at the time of packet transmission. For example, the communication control circuit 20a causes the SerDes 22 to enter the normal operation state when each of the DMA controllers 23a and 24a starts generating a packet while the SerDes 22 is in the power-saving state. Therefore, when each of the DMA controllers 23a and 24a transmits a generated packet, the communication control circuit 20a can prevent an increase in the latency due to a time needed to shift the SerDes 22 from the power-saving state to the normal operation state.

### Third Embodiment

While the embodiments of the present invention have been explained above, the present invention may be embodied in various forms other than the embodiments described above. Therefore, other embodiments of the present invention will be explained below as a third embodiment.

### (1) The number of transmission Paths

Each of the communication control circuits 20 and 20a has the two SerDeses 21 and 22. Namely, each of the communication control circuits 20 and 20a transmits packets via two transmission paths. However, the embodiments are not limited to the above, and the communication control circuit may include an arbitrary number of SerDeses such that each of the SerDeses transmits packets via the transmission paths.

Furthermore, each of the communication control circuits 20 and 20a may determine the number of the SerDeses to be shifted to the power-saving state according to the number of packets to be transmitted, and causes the determined number of SerDeses to enter the power-saving state.

Namely, the communication control circuit includes a plurality of SerDeses and selects the number of SerDeses to be shifted to the power-saving state according to the number of packets stored in the queues. The communication control circuit may cause the selected number of SerDeses to enter the power-saving state among the SerDeses.

For example, the communication control circuit that performs the above process measures the sum of packets stored in queues of the communication control circuit. The communication control circuit calculates the number of SerDeses by which the measured number of packets can be transmitted during one cycle. Subsequently, the communication control circuit may maintain the calculated number of the SerDeses in the normal operation state, and shift the other SerDeses to the power-saving state.

Furthermore, the communication control circuit includes a plurality of SerDeses and measures the number of DMA controllers that are generating packets among DMA controllers of the communication control circuit. The communication control circuit may select the number of SerDeses to be shifted to the power-saving state in accordance with the measured number of the DMA controllers, and causes the selected number of the SerDeses to enter the power-saving state.

For example, the communication control circuit that performs the above process measures the number of DMA controllers that are generating packets among the DMA controllers of the communication control circuit. The communication control circuit may maintain a certain number of SerDeses according to the measured number of the DMA controllers in the normal operation state, and may shift the other SerDeses to the power-saving state.

The communication control circuit as described above can appropriately reduce the power consumption and flexibly set a balance between the latency allowed for transmission of packets, a speed for transmitting packet by each of the SerDeses, or a speed for generating a packet to be transmitted, and the amount of power to be reduced.

### (2) The number of DMA controllers

The communication control circuit 20 described above includes the same number of the DMA controllers 23 and 24 as the SerDeses 21 and 22. Namely, the communication control circuit 20 includes the same number of DMA controllers as the transmission paths for transmitting and receiving packets. However, the embodiments are not limited to the above, and the communication control circuit 20 may include a different number of DMA controllers from the transmission paths. Similarly, the communication control circuit 20a may include a different number of the DMA controllers from the transmission paths.

### (3) The number of packets to be transmitted

The communication control circuit 20 described above monitors the number of queues stored in each of the queues 25 and 26 in order to determine the amount of data to be transmitted. The communication control circuit 20a also monitors whether each of the DMA controllers 23a and 24a is generating a packet in order to determine the amount of data to be transmitted. However, the embodiments are not limited to the above.

For example, the communication control circuit measures the number of DMA controllers that are generating packets, and measures the number of packets stored in the queues. Furthermore, the communication control circuit may determine the number of SerDeses to be shifted to the power-saving state according to the measured number of the DMA controllers and the measured number of packets. The communication control circuit may give arbitrary weight to each of the number of DMA controllers and the calculated number of packets when determining the number of the SerDeses to be shifted to the power-saving state.

### [Explanation of Reference]

- 1, 7: LSI
- 2, 8, 20: COMMUNICATION CONTROL CIRCUIT
- 3 to 6, 9 to 12, 21, 22: SERDES
- 23, 23a, 24, 24a: DMA CONTROLLER
- 25, 26: QUEUE
- 27: PRIORITY CIRCUIT
- 28: PATH SELECTION CIRCUIT
- 30, 30a: POWER MANAGER
- 31: ADDER
- 32: COMPARATOR
- 33: COUNTER

## Claims

1. A communication control apparatus comprising:
a transmitting unit that transmits data to other communication control apparatuses;
a monitoring unit that monitors an amount of data to be transmitted by the transmitting unit;
a determining unit that determines whether to shift a state of the transmitting unit to a power-saving state according to the amount of data monitored by the monitoring unit, the power-saving state being a state in which power consumption is lower than power consumption in a normal state; and
a control unit that causes the transmitting unit to enter the power-saving state when the determining unit determines that the state of the transmitting unit is to be shifted to the power-saving state.

2. The communication control apparatus according to claim 1, further comprising a temporary storage unit that temporarily stores therein data transmitted by the transmitting unit, wherein
the monitoring unit monitors an amount of data stored in the temporary storage unit, and
the determining unit determines that the state of the transmitting unit is to be shifted to the power-saving state when determining that the amount of data monitored by the monitoring unit is smaller than a predetermined threshold.

3. The communication control apparatus according to claim 1, further comprising a data generating unit that generates data to be transmitted by the transmitting unit, wherein
the monitoring unit monitors whether the data generating unit is generating data, and
the determining unit determines that the state of the transmitting unit is to be shifted to the power-saving state when the monitoring unit detects that the data generating unit is not generating data.

4. The communication control apparatus according to claim 2, wherein
the communication control apparatus includes a plurality of the transmitting units,
the determining unit determines the number of transmitting units to be shifted to the power-saving state according to the amount of data that is monitored by the monitoring unit and that is stored in the temporary storage unit, and
the control unit shifts the same number of transmitting units as the number determined by the determining unit to the power-saving state.

5. The communication control apparatus according to claim 3, wherein
the communication control apparatus includes a plurality of the transmitting units,
the communication control apparatus includes a plurality of the data generating units,
when the monitoring unit detects data generating units that are not generating data, the determining unit measures the number of data generating units that are not generating data and determines the number of transmitting units to be shifted to the power-saving state based on the measured number, and
the control unit shifts the same number of transmitting units as the number determined by the determining unit to the power-saving state.

6. The communication control apparatus according to claim 4 or 5, wherein the determining unit determines the number of transmitting units to be shifted to the power-saving state so that a pre-set number of transmitting units are maintained in a normal operation state.

7. A communication control method implemented by a communication control apparatus that includes a transmission circuit for transmitting data to other communication control apparatuses, the communication control method comprising:
monitoring an amount of data to be transmitted by the transmission circuit;
determining whether to shift a state of the transmission circuit to a power-saving state according to the amount of data monitored at the monitoring, the power-saving state being a state in which power consumption is lower than power consumption in a normal state; and
causing the transmission circuit to enter the power-saving state when it is determined that the state of the transmission circuit is to be shifted to the power-saving state.

8. A communication control circuit comprising:
a transmitting unit that transmits data to other communication control apparatuses;
a monitoring unit that monitors an amount of data to be transmitted by the transmitting unit;
a determining unit that determines whether to shift a state of the transmitting unit to a power-saving state according to the amount of data monitored by the monitoring unit, the power-saving state being a state in which power consumption is lower than power consumption in a normal state; and
a control unit that causes the transmitting unit to enter the power-saving state when the determining unit determines that the state of the transmitting unit is to be shifted to the power-saving state.
